# EUROPEAN PATENT APPLICATION

(11) **EP 2 423 461 A2**
(43) Date of publication of application: **29.02.2012**
(21) Application number: 10159604.7
(22) Date of filing: 12.04.2010
(51) Int. Cl.: F01K 13/02, F01K 23/10, F02C 7/10, F02C 6/00

(54) **Systems Involving Hybrid Power Plants**

(30) Priority: 14.04.2009 US 423415
(71) Applicant: General Electric Company, Schenectady, NY 12345 (US)
(72) Inventor: Schroder, Mark Stewart, Greenville, SC 29615 (US); Alexander, Michael Joseph, Simpsonville, SC 29680 (US); Johnson, Scott Francis, Simpsonville, SC 29681 (US); Snider, David August, Simpsonville, SC 29681 (US)
(74) Representative: Gray, Thomas

(57) **Abstract**

A system comprises a first heat recovery steam generator (HRSG) (102) having an upstream intake duct portion (101), a first gas turbine engine (106) connected to a first exhaust duct operative to output exhaust from the first gas turbine engine (106) to the upstream intake duct portion (101) of the first HRSG (102), and a second gas turbine engine (104) connected to a second exhaust duct operative to output exhaust from the second gas turbine engine (104) to the upstream intake duct portion (101)of the first HRSG (106).

## Description

### BACKGROUND OF THE INVENTION

The subject matter disclosed herein relates to power generation and more particularly to power generation in hybrid power plants.

Power plants using steam turbines often include gas turbine engines. The gas turbine engines may be used during a cold start up of the plant and to increase power generation during plant operation. In a hybrid plant, the exhaust from gas turbine engines may be incorporated into the thermal cycle of the plant to increase the efficiency of steam generation. The operational specifications of gas turbines including, for example, exhaust temperatures, fuel consumption, and emissions affect the efficiency of a hybrid plant.

### BRIEF DESCRIPTION OF THE INVENTION

According to one aspect of the invention, a system comprises a first heat recovery steam generator (HRSG) having an upstream intake duct portion, a first gas turbine engine connected to a first exhaust duct operative to output exhaust from the first gas turbine engine to the upstream intake duct portion of the first HRSG, and a second gas turbine engine connected to a second exhaust duct operative to output exhaust from the second gas turbine engine to the upstream intake duct portion of the first HRSG.

According to another aspect of the invention, a system comprises a first heat recovery steam generator (HRSG) having an upstream intake duct portion, a first gas turbine engine connected to a first exhaust duct operative to output exhaust from the first gas turbine engine to the upstream intake duct portion of the first HRSG, a duct burner portion operative to heat the output exhaust of the first gas turbine engine, and a second gas turbine engine connected to a second exhaust duct operative to output exhaust from the second gas turbine engine to the upstream intake duct portion of the first HRSG.

According to yet another aspect of the invention, a system comprises a first heat recovery steam generator (HRSG) having an upstream intake duct portion and a downstream intake duct portion, a first gas turbine engine operative to output exhaust to the upstream intake duct portion of the first HRSG, wherein the exhaust from the first gas turbine engine is operative to heat the first HRSG to a first temperature, a second gas turbine engine operative to output exhaust to the upstream intake duct portion of the first HRSG wherein the exhaust from the second gas turbine engine is operative to heat the first HRSG to a second temperature.

These and other advantages and features will become more apparent from the following description taken in conjunction with the drawings.

### BRIEF DESCRIPTION OF THE DRAWING

There follows a detailed description of embodiments of the invention by way of example only with reference to the accompanying drawings, in which:
FIG. 1 is an exemplary embodiment of a hybrid power system.
FIG. 2 is an alternate exemplary embodiment of a hybrid power system.
FIG. 3 is another alternate exemplary embodiment of a hybrid power system.
FIG. 4 is a graph of a simulated output of a hybrid plant.

### DETAILED DESCRIPTION OF THE INVENTION

Hybrid plants include a heavy frame and aeroderivative gas turbine engine connected to a generator(s) to produce power. The aeroderivative gas turbine engine may be used, for example, during periods of peak power consumption to augment the power produced by a steam turbine. Hybrid power plants having steam turbines and gas turbine engines may incorporate heat recovery steam generators (HRSGs) that use the heat from the exhaust gas of the aeroderivative gas turbine engine to generate additional steam that powers the steam turbine. The use of the exhaust gas from the aeroderivative gas turbine engine increases the efficiency of hybrid plants at part loads and may reduce fuel consumption and pollution during loading and unloading of the power plant.

During a cold startup of a typical plant, operation of the heavy frame gas turbine engine in a condition appropriate for preheating the cold HRSG results in undesirable levels pollutant emissions. The use of an aeroderivative gas turbine engine at operating parameters that reduce the exhaust temperature to a level appropriate for preheating the cold HRSG efficiently decreases undesirable pollutant emission levels.

During a cold start up sequence for a hybrid plant, the exhaust from the aeroderivative gas turbine engine is used to preheat the HRSG. Preheating the HRSG starts with a cold HRSG that is gradually heated by exhaust from the aeroderivative gas turbine engine until the HRSG reaches a normal operating temperature. Operating the aeroderivative gas turbine to preheat the HRSG reduces the time the heavy frame operates at low loads and results in lower total power plant emissions of undesirable pollutants. The parameters used to define operating temperatures at startup and normal operation of the HRSG are typically defined by the designed specifications of a particular plant and the associated system components. For example, the design of the steam turbines of the plant often defines the specifications used to operate the HRSG. Systems for efficiently preheating and operating a hybrid plant are described below.

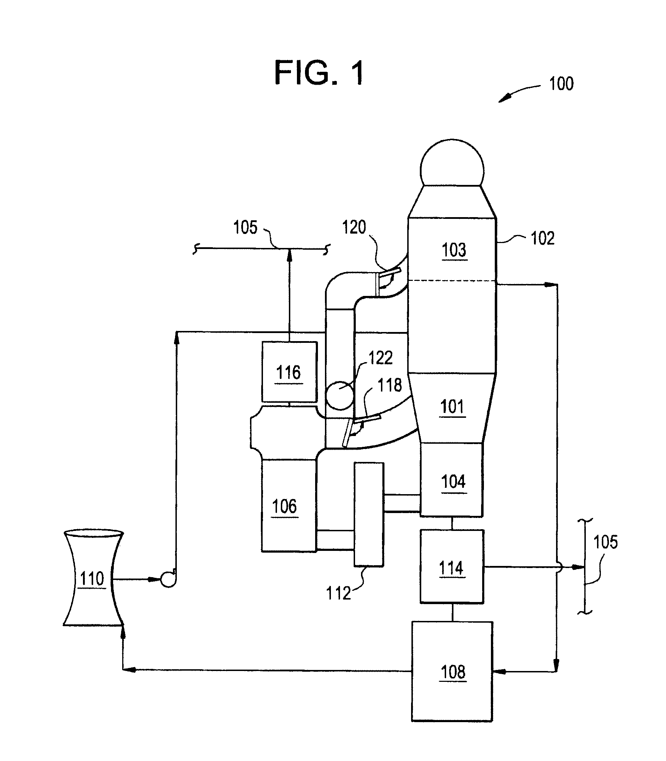

FIG. 1 illustrates an exemplary embodiment of a hybrid power system 100. The system includes a HRSG 102 having an upstream intake duct portion 101 and a downstream intake duct portion 103, a heavy frame gas turbine engine 104, a light frame gas turbine engine 106, a steam turbine 108, a condenser 110, an air inlet 112, an alternator/generator 114, an alternator/generator 116, an electrical grid 105, an upstream intake duct damper 118, a downstream intake duct damper 120, and a bypass stack 122.

The system 100 may operate in a number of different modes including, for example, cold plant start up, normal operation, and peak output operation and turndown operation. In an exemplary cold plant startup sequence, the system 100 begins with a cold, non-operating plant. The light frame gas turbine engine 106 is started, with the upstream intake duct damper 118 and the downstream intake duct damper 120 closed. The bypass stack 122 is open. Ambient air is received by the air inlet 112, mixed with fuel, and combusted in the light frame gas turbine engine 106. The alternator/generator 116 may be brought online, and the power from the alternator/generator 116 sent to the grid 105. The exhaust from the light frame gas turbine engine 106 is output by the bypass stack 122. The upstream intake duct damper 118 is opened, and the bypass stack 122 is closed-routing the exhaust from the light frame gas turbine engine 106 to the upstream intake duct portion 101 of the HRSG 102. The exhaust from the light frame gas turbine engine 106 begins preheating the HRSG 102 and/or a steam turbine.

The light frame gas turbine engine 106 is designed to operate efficiently and with low pollution emissions while outputting exhaust gas at a temperature within the preheat temperature specifications of the HRSG 102 and the associated steam turbine. Once the HRSG 102 is preheated to a temperature threshold that is associated with the exhaust temperature of the light frame gas turbine engine 106, the heavy frame gas turbine engine 104 is started. The heavy frame gas turbine engine 104 operates efficiently at an exhaust temperature that is higher than the light frame gas turbine engine 106 and outputs a higher temperature exhaust into the upstream intake duct portion 101 of the HRSG 102. Once the heavy frame gas turbine engine 104 is operating at a desired frequency the alternator/generator 114 may be brought online and deliver power to the grid 105, the light frame gas turbine engine 106 may be shut down, and the upstream intake duct damper 118 is closed. The heavy frame gas turbine engine 104 exhaust continues to preheat the HRSG 102. Once the HRSG 102 is preheated to a desired temperature, the HRSG 102 may produce steam for the steam turbine 108. In normal operation, the steam turbine 108 may receive steam from another boiler (not shown) in the system 100, and the heavy frame gas turbine engine 104 may be shut down. Alternatively, the heavy frame gas turbine engine 104 may remain running and provide power to the grid 105 and exhaust gas to heat the HRSG 102.

In peak operation, the light frame gas turbine engine 106 may be used with the alternator/generator 116 to provide additional power to the grid 105. In peak operation the heavy frame gas turbine engine 104 is operating efficiently; turning the alternator/generator 114, and outputting exhaust to the upstream intake duct portion 101 of the HRSG 102. The light frame gas turbine engine 106 is started with the upstream intake duct damper 118 and the downstream intake duct damper 120 closed and the bypass stack 122 open. Once the light frame gas turbine engine 106 is operating at a desired output, the downstream intake duct damper 120 is opened and the bypass stack 122 is closed-routing exhaust from the light frame gas turbine engine 106 to the downstream intake duct portion 103 of the HRSG 102.

When the light frame gas turbine engine 106 and the heavy frame gas turbine engine 104 are each operating at an efficient output level, the exhaust temperatures of the gas turbine engines are dissimilar. Typically, the exhaust temperature of the light frame gas turbine engine 106 operating at a desired efficiency is lower than the temperature of the heavy frame gas turbine engine 104 operating at a desired efficiency. Routing the cooler exhaust of the light frame gas turbine engine 106 to mix with the hotter exhaust of the heavy frame gas turbine engine 104 at the upstream intake duct portion 101 of the HRSG 102 is undesirable since the cooler exhaust of the light frame gas turbine engine 106 reduces the effectiveness of the hotter exhaust of the heavy frame gas turbine engine 104. As the exhaust from the heavy frame gas turbine engine 104 flows down stream through the HRSG 102, the exhaust cools by creating steam in the HRSG 102. Eventually, the exhaust from the heavy frame gas turbine engine 104 reaches a temperature that effectively matches the temperature of the exhaust of the light frame gas turbine engine 106. The region where the exhaust from the heavy frame gas turbine engine 104 reaches a temperature that effectively matches the temperature of the exhaust of the light frame gas turbine engine 106 is the input region for the downstream intake duct portion 103 of the HRSG 102.

Thus, the exhaust of the heavy frame gas turbine engine 104 mixes with the exhaust of the light frame gas turbine engine 106 at a similar temperature in the downstream intake duct portion 103 of the HRSG 102. Routing the exhaust of the light frame gas turbine engine 106 to mix with the exhaust of the heavy frame gas turbine engine 104 in the HRSG 102 in a region where the temperatures of the exhaust are matched, allows the heavy frame gas turbine engine 104 and the light frame gas turbine engine 106 to operate at efficient output levels; providing power to the grid 105 and efficiently contributing exhaust gas to the HRSG 102.

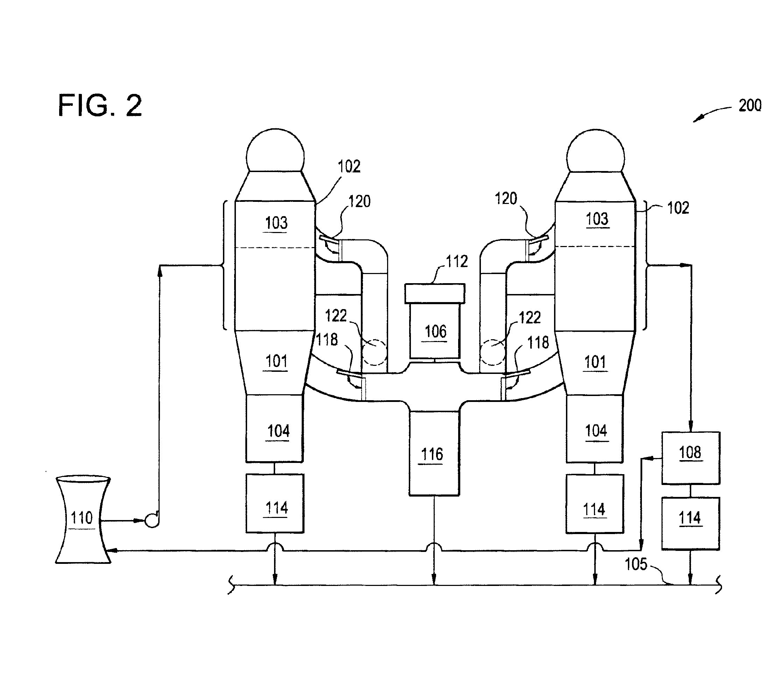

FIG. 2 illustrates an alternate exemplary embodiment of a hybrid power system. The system 200 is similar to the system 100 described above and includes a second HRSG 102 connected to a second heavy frame gas turbine engine 104 and alternator/generator 114. In operation, the system 200 operates similarly to the system 100 and may operate using either HRSG 102 (with a heavy frame gas turbine engine 104 and alternator/generator 114) combination alone or in tandem.

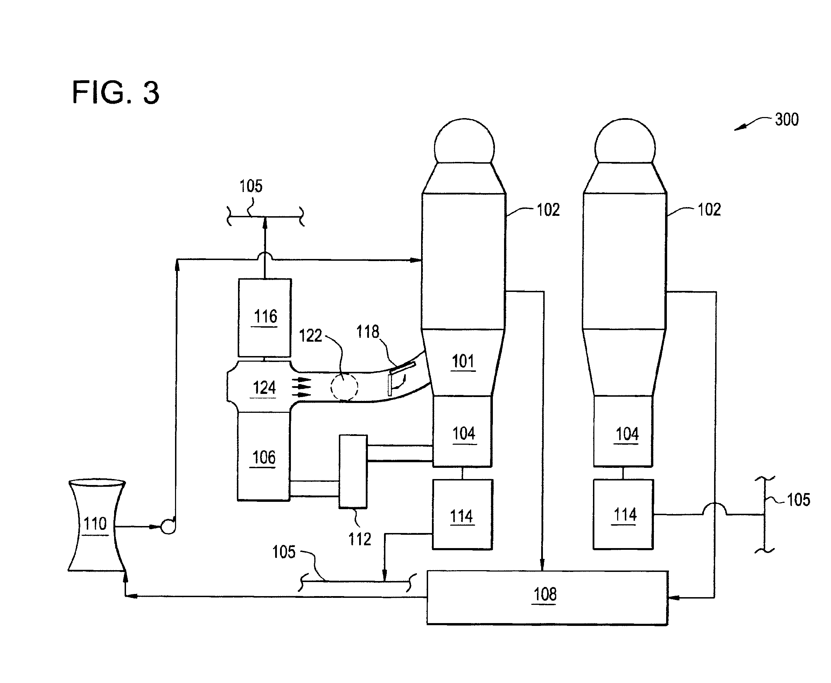

FIG. 3 illustrates another alternate exemplary embodiment of a hybrid power system. The system 300 is similar to the system 100 described above, and includes a duct burner 124, but may not include a downstream intake duct portion 103 of FIG. 1, and a downstream intake duct damper 120. The duct burner 124 is disposed in the exhaust path of the light frame gas turbine engine 106 of FIG.1. The duct burner may raise the temperature of the exhaust flow from the gas turbine engine 106 to match the exhaust flow temperature of gas turbine engine 104. The resulting mixed exhaust flow temperature is maintained at the prescribed design point temperature providing for optimum HRSG steam production.

The embodiments described above show exemplary systems. Other embodiments may include a variety of combinations of gas turbine engines, HRSGs, and steam turbines. The embodiments are not limited for example, to one or two HRSGs, but may include any number of HRSGs, gas turbine engines, and associated equipment. The terms light frame and heavy frame gas turbine engine are not limiting and used for illustrative purposes. For example a heavy frame gas turbine engine having desired design specifications may be substituted for a light frame gas turbine engine. Likewise, a light frame gas turbine engine may in some applications be substituted for a heavy frame gas turbine engine or any other gas turbine engine that may also be in the aero-derivative branch of gas turbine engines.

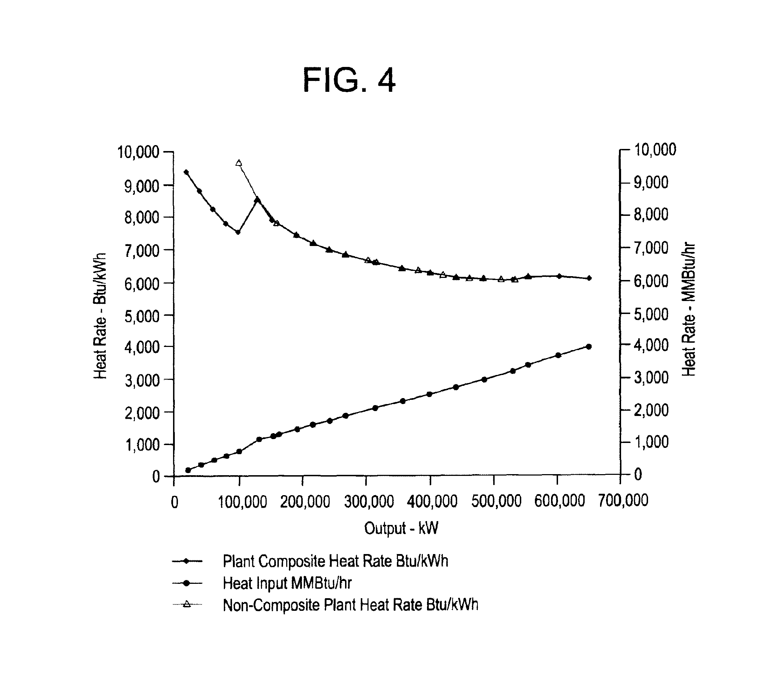

FIG. 4 illustrates a graph of a simulated output of a hybrid plant similar to the embodiments described above. The graph illustrates the output in kilowatts (kW), the Heat Rate in British thermal units per kilowatt hour (Btu/KWh), and the Heat Input in (MMBtu/hr). The Plant Composite Heat Rate function shows the Heat Rate of an embodiment of a hybrid plant as a function of kW. Below 100,000 kW, the plant is operating with the light frame gas turbine engine 106 online, generating power from cold plant. At approximately 125,000 kW, the heavy frame gas turbine engine 104 is brought online initiating the transition between light frame gas turbine operation and heavy duty gas turbine operation. After which the light frame gas turbine engine 106 may be taken offline. Peak operation is shown at approximately 525,000 kW where the light frame gas turbine engine 106 is brought online increasing the peak power output of the system. The bottom function of the graph illustrates the Heat Input of the system as a function of kW. A function of a Non-composite Plant Heat Rate is illustrated that represents the Heat Rate of the system when the light frame gas turbine engine 106, is not used. The Non-composite Plant Heat Rate at approximately 100,000 kW is higher than the Plant Composite Heat Rate, and the Non-composite Plant does not produce power below 100,000 kW since the light frame gas turbine engine 106 is not operating. The high end kW output of the Non-composite Plant is also lower than the Composite Plant.

The functions shown in FIG. 4 illustrate that the embodiments of the systems described above offer increased efficiency from plant startup when the light frame gas turbine engine 106 is operating and increased peak plant output and when both the light frame gas turbine engine 106 and the heavy frame gas turbine engine 104 are operating. The use of both a light frame and heavy frame gas turbine in a power system offer increased flexibility, system efficiency, and lower overall pollution emissions over a larger power output range.

In operation, the cold plant startup sequence of the system 300 of FIG. 3 is similar to the cold plant startup sequence of the system 100 of FIG. 1, with the duct burner offline. In peak operation, heavy frame gas turbine engine 104 and the light frame gas turbine engine 106 to operate at efficient output levels. The upstream intake duct damper 118 is opened, and the duct burner is started. The duct burner mixes fuel with the exhaust from the light frame gas turbine engine 106 and combusts the mixture-raising the temperature of the exhaust from the light frame gas turbine engine 106 to effectively match the temperature of the exhaust of the heavy frame gas turbine engine 104. The exhaust of the heavy frame gas turbine engine 104 mixes with the exhaust of the light frame gas turbine engine 106 in the upstream intake duct portion 101 of the HRSG 102 and the exhaust mixture flows through the HRSG 102 creating steam in the HRSG 102. The use of the duct burner 124 to heat the exhaust of the light frame gas turbine engine 106 prior to mixing the exhaust of the light frame gas turbine engine 106 with the exhaust of the heavy frame gas turbine engine 104 allows the HRSG 102 to operate efficiently while both the light frame gas turbine engine 106 and the heavy frame gas turbine engine 104 operate at peak efficient operating levels.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

For completeness, various aspects of the invention are now set out in the following numbered clauses:
1. A system comprising:
   a first heat recovery steam generator (HRSG) having an upstream intake duct portion;
   a first gas turbine engine connected to a first exhaust duct operative to output exhaust from the first gas turbine engine to the upstream intake duct portion of the first HRSG; and
   a second gas turbine engine connected to a second exhaust duct operative to output exhaust from the second gas turbine engine to the upstream intake duct portion of the first HRSG.
2. The system of clause 1, wherein the system further comprises an exhaust duct connected to the first gas turbine engine operative to output exhaust from the first gas turbine engine to a downstream intake duct portion of the first HRSG.
3. The system of clause 1, wherein the system further comprises a second HRSG having an upstream intake duct portion.
4. The system of clause 3, wherein the system further comprises an exhaust duct connected to the first gas turbine engine operative to output exhaust from the first gas turbine engine to the upstream intake duct portion of the second HRSG.
5. The system of clause 3, wherein the system further comprises an exhaust duct connected to the second gas turbine engine operative to output exhaust from the second gas turbine engine to the upstream intake duct portion of the second HRSG.
6. The system of clause 3, wherein the system further comprises an exhaust duct connected to the first gas turbine engine operative to output exhaust from the first gas turbine engine to a downstream intake duct portion of the second HRSG.
7. The system of clause 1, wherein the output exhaust from the first gas turbine engine to the upstream intake duct portion of the first HRSG is operative to heat the first HRSG.
8. The system of clause 1, wherein the output exhaust from the second gas turbine engine to the upstream intake duct portion of the first HRSG is operative to heat the first HRSG.
9. The system of clause 1, wherein a temperature of the output exhaust from the first gas turbine engine to the downstream intake duct portion of the first HRSG is lower than a temperature of the output exhaust from the second gas turbine engine to the upstream intake duct portion of the first HRSG.
10. A system comprising:
   a first heat recovery steam generator (HRSG) having an upstream intake duct portion;
   a first gas turbine engine connected to a first exhaust duct operative to output exhaust from the first gas turbine engine to the upstream intake duct portion of the first HRSG;
   a duct burner portion operative to heat the output exhaust of the first gas turbine engine; and
   a second gas turbine engine connected to a second exhaust duct operative to output exhaust from the second gas turbine engine to the upstream intake duct portion of the first HRSG.
11. The system of clause 10, wherein the system further comprises a second HRSG having an upstream intake duct portion.
12. The system of clause 11, wherein the system further comprises an exhaust duct connected to the first gas turbine engine operative to output exhaust from the first gas turbine engine to the upstream intake duct portion of the second HRSG.
13. The system of clause 10, wherein the system further comprises an exhaust duct connected to the second gas turbine engine operative to output exhaust from the second gas turbine engine to the upstream intake duct portion of the second HRSG.
14. The system of clause 10, wherein the output exhaust from the first gas turbine engine to the upstream intake duct portion of the first HRSG is operative to heat the first HRSG.
15. The system of clause 10, wherein the output exhaust from the second gas turbine engine to the upstream intake duct portion of the first HRSG is operative to heat the first HRSG.
16. The system of clause 10, wherein the a duct burner portion is further operative to heat the output exhaust of the first gas turbine engine to a temperature that approximately matches the temperature of the output exhaust from the second gas turbine engine.
17. A system comprising:
   a first heat recovery steam generator (HRSG) having an upstream intake duct portion and a downstream intake duct portion;
   a first gas turbine engine operative to output exhaust to the upstream intake duct portion of the first HRSG, wherein the exhaust from the first gas turbine engine is operative to heat the first HRSG to a first temperature;
   a second gas turbine engine operative to output exhaust to the upstream intake duct portion of the first HRSG wherein the exhaust from the second gas turbine engine is operative to heat the first HRSG to a second temperature.
18. The system of clause 17, wherein the second temperature is greater than the first temperature.
19. The system of clause 17, wherein the first gas turbine engine is further operative to output exhaust to the downstream intake duct portion of the first HRSG.
20. The system of clause 17, wherein the system further comprises a duct burner portion operative to heat the output exhaust of the first gas turbine engine.

## Claims

1. A system comprising:
a first heat recovery steam generator (HRSG) (102) having an upstream intake duct portion (101);
a first gas turbine engine (106) connected to a first exhaust duct operative to output exhaust from the first gas turbine engine (106) to the upstream intake duct portion (101) of the first HRSG (102); and
a second gas turbine engine (104) connected to a second exhaust duct operative to output exhaust from the second gas turbine engine (104) to the upstream intake duct portion (101) of the first HRSG (106).

2. The system of claim 1, wherein the system further comprises an exhaust duct connected to the first gas turbine engine (106) operative to output exhaust from the first gas turbine engine (106) to a downstream intake duct portion (103) of the first HRSG (106).

3. The system of claim 1 or 2, wherein the system further comprises a second HRSG (106) having an upstream intake duct portion (101).

4. The system of claim 3, wherein the system further comprises an exhaust duct connected to the first gas turbine engine (106) operative to output exhaust from the first gas turbine engine (106) to the upstream intake duct portion (101) of the second HRSG (102).

5. The system of claim 3, wherein the system further comprises an exhaust duct connected to the second gas turbine engine (104) operative to output exhaust from the second gas turbine engine (104) to the upstream intake duct portion (101) of the second HRSG (102).

6. The system of claim 3, wherein the system further comprises an exhaust duct connected to the first gas turbine engine (106) operative to output exhaust from the first gas turbine engine (106) to a downstream intake duct portion (103) of the second HRSG (102).

7. The system of any of the preceding claims, wherein the output exhaust from the first gas turbine engine (106) to the upstream intake duct portion (101) of the first HRSG (102) is operative to heat the first HRSG (102).

8. The system of any of the preceding claims, wherein the output exhaust from the second gas turbine engine (104) to the upstream intake duct portion (101) of the first HRSG (102) is operative to heat the first HRSG (102).

9. The system of any of the preceding claims, wherein a temperature of the output exhaust from the first gas turbine engine (106) to the downstream intake duct portion (103) of the first HRSG (102) is lower than a temperature of the output exhaust from the second gas turbine engine (104) to the upstream intake duct portion (101) of the first HRSG (102).
